# EUROPÄISCHE PATENTSCHRIFT

(11) **EP 4 277 808 B1**
(45) Veröffentlichungstag und Bekanntmachung des Hinweises auf die Patenterteilung: **09.04.2025**
(21) Anmeldenummer: 22701911.4
(22) Anmeldetag: 14.01.2022
(51) Int. Cl.: B60R 9/04

(54) **DACHRELING FÜR EIN KRAFTFAHRZEUG, KRAFTFAHRZEUG SOWIE VERFAHREN ZUM HERSTELLEN EINER DACHRELING**
ROOF RACK FOR A MOTOR VEHICLE, MOTOR VEHICLE, AND METHOD FOR PRODUCING A ROOF RACK
GALERIE DE TOIT POUR UN VÉHICULE MOTORISÉ, VÉHICULE MOTORISÉ, ET PROCÉDÉ DE PRODUCTION D'UNE GALERIE DE TOIT

(30) Priorität: 15.01.2021 DE 102021200375
(43) Veröffentlichungstag der Anmeldung: 22.11.2023
(73) Patentinhaber: Fysam Auto Decorative GmbH, 89555 Steinheim am Albuch (DE)
(72) Erfinder: SIRRENBERG, Stefan, 69437 Neckargerach (DE)
(74) Vertreter: Dietz, Christopher Friedrich
(86) Internationale Anmeldenummer: PCT/EP2022/050725
(87) Internationale Veröffentlichungsnummer: WO 2022/152834

(56) Entgegenhaltungen:
- DE-A1- 19 732 288
- DE-C1- 4 422 421
- DE-C1- 4 441 802
- JP-A- 2005 145 124
- US-A- 4 767 040
- US-A- 5 636 954

## Beschreibung

Die Erfindung betrifft eine Dachreling für ein Kraftfahrzeug, mit mindestens einem Galeriestab und zumindest einer Befestigungseinrichtung zur endseitigen Befestigung des Galeriestabs an einem Dach des Kraftfahrzeugs, wobei die Befestigungseinrichtung eine an dem Galeriestab befestigte und an dem Dach befestigbare Befestigungsvorrichtung und ein die Befestigungsvorrichtung zumindest bereichsweise aufnehmendes Adapterbauteil aufweist. Die Erfindung betrifft weiterhin ein Kraftfahrzeug mit einem Dach und einer an dem Dach befestigten Dachreling sowie ein Verfahren zum Herstellen einer Dachreling.

Aus dem Stand der Technik ist beispielsweise die Druckschrift WO 2013/107683 A1 bekannt. Diese beschreibt eine Dachreling für ein Kraftfahrzeug, mit mindestens einem Galeriestab und mit mindestens einem an dem Galeriestab befestigten Stützelement zur Überbrückung eines zwischen dem Galeriestab und dem Dach des Kraftfahrzeugs ausgebildeten Abstands und zur Festlegung der Dachreling am Dach des Kraftfahrzeugs, sowie mit mindestens einer Abdeckung für das Stützelement, wobei Galeriestab, Stützelement und Abdeckung als separate Bauteile ausgebildet sind. Es ist vorgesehen, dass mindestens ein Endbereich des Galeriestabs als gebogener Abschnitt ausgebildet ist, dessen Stirnende ein Dachauflegeende bildet, dass das Stützelement als Strangpressbauteil ausgebildet ist und dass sich Stützelement und Abdeckung zumindest teilweise im Bereich des gebogenen Abschnitts befinden.

Es ist Aufgabe der Erfindung, eine Dachreling für ein Kraftfahrzeug vorzuschlagen, welche gegenüber bekannten Dachrelings Vorteile aufweist, insbesondere besonders zuverlässig und dauerhaft an dem Dach des Kraftfahrzeugs festlegbar und optisch besonders gefällig ausgestaltet ist.

Dies wird erfindungsgemäß mit einer Dachreling für ein Kraftfahrzeug mit den Merkmalen des Anspruchs 1 erreicht. Dabei ist vorgesehen, dass das Adapterbauteil als Spritzgießbauteil ausgebildet ist und die Befestigungsvorrichtung umspritzt in dem Adapterbauteil vorliegt.

Vorteilhafte Ausgestaltungen mit zweckmäßigen Weiterbildungen der Erfindung sind in den abhängigen Ansprüchen angegeben.

Die Dachreling ist bevorzugt Bestandteil des Kraftfahrzeugs, kann jedoch selbstverständlich auch separat von diesem vorliegen. Die Dachreling dient beispielsweise einer Befestigung eines Dachgepäckträgers an dem Kraftfahrzeug. Hierbei stützt sich der Dachgepäckträger über die Dachreling an dem Dach des Kraftfahrzeugs ab. Die Dachreling kann jedoch selbstredend auch aus rein optischen Gründen an dem Kraftfahrzeug angeordnet sein.

Die Dachreling weist zumindest den wenigstens einen Galeriestab und die zumindest eine Befestigungseinrichtung auf. Unter dem Galeriestab ist ein Bestandteil der Dachreling zu verstehen, welcher sich nach einer Montage der Dachreling an dem Kraftfahrzeug bevorzugt in Längsrichtung des Kraftfahrzeugs oder zumindest in etwa in Längsrichtung erstreckt, also parallel oder in etwa parallel zu einer Längsachse des Kraftfahrzeugs angeordnet ist. Hierbei erstreckt sich der Galeriestab über einen wesentlichen Teil einer Erstreckung des Dachs in Richtung der Längsachse, bevorzugt über mindestens 70 %, mindestens 80 % oder mindestens 90 %. Auch andere Ausrichtungen und Erstreckungen des Galeriestabs sind jedoch grundsätzlich realisierbar. Der Galeriestab weist bevorzugt eine im Schnitt gesehen der Befestigungseinrichtung abgewandte Oberseite, von der Oberseite ausgehende Seitenwände sowie eine auf einer Auflagefläche der Befestigungseinrichtung aufliegende Bodenwand auf. Die Oberseite und die Bodenwand sind über die Seitenwände miteinander verbunden.

Beispielsweise ist der Galeriestab derart ausgestaltet, dass er sich nach der Montage der Dachreling an dem Kraftfahrzeug über zumindest einen Großteil seiner Längserstreckung an dem Dach des Kraftfahrzeugs abstützt, insbesondere durchgehend beziehungsweise ununterbrochen. Bevorzugt stützt sich der Galeriestab über seine gesamte Längserstreckung dem Dach des Kraftfahrzeugs ab. Es kann jedoch auch vorgesehen sein, dass sich der Galeriestab lediglich bereichsweise an dem Dach des Kraftfahrzeugs abstützt, insbesondere lediglich einseitig mittels der Befestigungseinrichtung oder mittels mehrerer Befestigungseinrichtungen. Ebenso ist es möglich, dass sich der Galeriestab mittels der Befestigungseinrichtungen endseitig an dem Dach abstützt und zwischen den Befestigungseinrichtungen lediglich bereichsweise von dem Dach beabstandet ist. Die hier vorgestellte Dachreling ist grundsätzlich für alle genannten Ausgestaltungen des Galeriestabs verwendbar.

Das Abstützen des Galeriestabs an dem Dach erfolgt bevorzugt über eine Schutzfolie, insbesondere aus Kunststoff, insbesondere aus einem Elastomer und/oder einem Schaumstoff, welche eine Beschädigung des Dachs durch die Dachreling beziehungsweise umgekehrt eine Beschädigung der Dachreling durch das Dach zuverlässig unterbindet und/oder eine wasserfeste Verbindung zwischen der Dachreling und dem Dach des Kraftfahrzeugs herstellt, sodass ein Eindringen von Feuchtigkeit aus einer Außenumgebung des Kraftfahrzeugs über die Dachreling beziehungsweise über eine Befestigung der Dachreling an dem Dach unterbunden wird. Die Schutzfolie kann im Rahmen dieser Beschreibung als Bestandteil des Dachs angesehen werden. Sofern also die Rede davon ist, dass sich die Dachreling an dem Dach abstützt, so kann dies unmittelbar ohne Schutzfolie oder bevorzugt über die Schutzfolie erfolgen. In ersterem Fall liegt die Dachreling direkt auf dem Dach auf, in letzterem Fall auf der an dem Dach angeordneten Schutzfolie.

Der Galeriestab ist mithilfe der zumindest einen Befestigungseinrichtung an dem Dach des Kraftfahrzeugs endseitig befestigt beziehungsweise befestigbar. Unter der endseitigen Befestigung ist zu verstehen, dass die Befestigungseinrichtung an einem Ende des Galeriestabs angreift und dieses mit dem Dach des Kraftfahrzeugs verbindet. In anderen Worten ist also die Befestigungseinrichtung an einem Ende des Galeriestabs angeordnet beziehungsweise an diesem befestigt. Und der Befestigung ist zu verstehen, dass der Galeriestab mittels der Befestigungseinrichtung vollständig festgelegt ist, also in Richtung einer Längsachse, einer Hochachse und einer Querachse des Kraftfahrzeugs, und kein Spiel oder allenfalls ein geringes Spiel zwischen Galeriestab und Dach ermöglicht oder zulässt.

Besonders bevorzugt ist der Galeriestab mit mehreren Befestigungseinrichtungen an dem Dach des Kraftfahrzeugs befestigt. Jede der Befestigungseinrichtungen dient hierbei zur endseitigen Befestigung des Galeriestabs an dem Dach, sodass die mehreren Befestigungseinrichtungen an voneinander beabstandeten Enden des Galeriestabs angreifen und diesen bezüglich des Dachs festlegen. Ein zwischen den mithilfe der Befestigungseinrichtungen befestigten Bereichen des Galeriestabs vorliegender Bereich des Galeriestabs stützt sich beispielsweise zumindest bereichsweise, bevorzugt durchgehend oder lediglich bereichsweise, an dem Dach des Kraftfahrzeugs ab oder ist durchgehend von dem Dach beabstandet. In jedem Fall stützt sich der Galeriestab zumindest endseitig über die Befestigungseinrichtungen an dem Dach ab, insbesondere liegt der Galeriestab dort selbst an dem Dach des Kraftfahrzeugs beziehungsweise an der Schutzfolie an.

Besonders bevorzugt verfügt die Dachreling über mehrere Galeriestäbe, welche insbesondere beabstandet parallel zueinander an dem Dach des Kraftfahrzeugs angeordnet sind. Jeder dieser Galeriestäbe ist mittels zumindest einer Befestigungseinrichtung an dem Dach des Kraftfahrzeugs endseitig befestigt. Vorzugsweise finden zur Befestigung jedes der Galeriestäbe jeweils mehrere Befestigungseinrichtungen Verwendung, insbesondere genau zwei Befestigungseinrichtungen. Die Erfindung betrifft insoweit auch eine Dachreling für ein Kraftfahrzeug, mit mindestens einem Galeriestab und mehreren Befestigungseinrichtungen zur jeweils endseitigen Befestigung des Galeriestabs an einem Dach des Kraftfahrzeugs, wobei jede der Befestigungseinrichtungen eine an dem Galeriestab befestigte und an dem Dach befestigbare Befestigungsvorrichtung und ein die Befestigungsvorrichtung zumindest bereichsweise aufnehmendes Adapterbauteil aufweist. Dabei ist wiederum vorgesehen, dass das jeweilige Adapterbauteil als Spritzgießbauteil ausgebildet ist und die jeweilige Befestigungsvorrichtung umspritzt in dem entsprechenden Adapterbauteil vorliegt.

Das Adapterbauteil ist grundsätzlich als Spritzgießbauteil ausgebildet. Das bedeutet, dass das Adapterbauteil durch Spritzgießen hergestellt wird. Die Befestigungsvorrichtung liegt umspritzt in dem Adapterbauteil vor. Hierunter ist zu verstehen, dass die Befestigungsvorrichtung vor dem Herstellen des Adapterbauteils bereitgestellt und während des Herstellens des Adapterbauteils mit einem Spritzgießmaterial umspritzt wird, sodass unmittelbar nach dem Spritzgießen das Adapterbauteil mit der in ihm angeordneten Befestigungsvorrichtung vorliegt. Die Befestigungsvorrichtung liegt derart umspritzt in dem Adapterbauteil vor, dass es formschlüssig in ihm gehalten ist. Besonders bevorzugt ist die Befestigungsvorrichtung vollständig in dem Adapterbauteil aufgenommen, sodass die Befestigungsvorrichtung zumindest nicht über das Adapterbauteil übersteht. Hierbei kann es durchaus vorgesehen sein, dass die Befestigungsvorrichtung aus einer Außenumgebung des Adapterbauteils sichtbar ist. Vorzugsweise ist die Befestigungsvorrichtung jedoch vollständig in der Einhüllenden des Adapterbauteils aufgenommen oder fluchtet allenfalls mit dieser. Die Einhüllende kann auch als Kontur des Adapterbauteils bezeichnet werden.

Bevorzugt bestehen das Adapterbauteil und die Befestigungsvorrichtung aus unterschiedlichen Materialien. Beispielsweise ist die Befestigungsvorrichtung aus Metall, wohingegen das Adapterbauteil aus Kunststoff besteht und entsprechend als Kunststoffspritzgießbauteil vorliegt. Beispielsweise besteht die Befestigungsvorrichtung aus Stahl, bevorzugt beschichteten Stahl. Beispielsweise ist der Stahl mit Zink und/oder Nickel beschichtet. Im Falle des mit Zink beschichteten Stahls kann auch von verzinktem Stahl gesprochen werden. Als Stahl wird bevorzugt ein mikrolegierter Stahl verwendet, beispielsweise S355MC gemäß DIN EN 10149-2. Dieser Stahl kann auch als 1.0976 bezeichnet werden. Als Kunststoff für das Adapterbauteil kommt beispielsweise Acrylnitril-Styrol-Acrylat-Copolymer (ASA) zum Einsatz, insbesondere Acrylnitril-Styrol-Acrylat-Copolymer gemäß TL52311. Die Oberfläche des Adapterbauteils ist bevorzugt zumindest bereichsweise mit einer Oberflächenstruktur, insbesondere einer Narbung, beispielsweise einer K 31-Narbung, versehen. Bevorzugt ist die Narbung lediglich in einem Sichtbereich des Adapterbauteils realisiert.

Die Befestigungsvorrichtung kann auf unterschiedliche Art und Weise realisiert sein. Beispielsweise liegt sie als durchgehendes Bauteil vor, welches insbesondere ein Band, insbesondere ein Metallband, oder ein Extrusionsbauteil ist. Bevorzugt liegt das Band in Form eines Blechbands vor. Das durchgehende Bauteil ist besonders bevorzugt gekrümmt beziehungsweise gebogen. Entsprechend weist es wenigstens eine Biegung beziehungsweise Krümmung auf, besonders bevorzugt mehrere parallel angeordnete Biegungen beziehungsweise Krümmungen. Alternativ weist die Befestigungsvorrichtung mehrere beabstandet voneinander angeordnete Verstärkungselemente auf.

Das Extrusionsbauteil liegt bevorzugt in Form eines Strangpressteil vor, ist also im Strangpressverfahren hergestellt. Das bedeutet, dass das Extrusionsbauteil in einer Richtung einen durchgehend gleich bleibenden Querschnitt aufweist, nämlich in einer Strangpressrichtung, in welcher das Extrusionsbauteil durch Strangpressen hergestellt wird. Bevorzugt wird mithilfe des Strangpressverfahrens zunächst ein Rohling hergestellt, welcher durch Trennen in parallel zueinander angeordneten Ebenen in mehrere Extrusionsbauteile aufgeteilt wird, welche insbesondere identisch sind. Die Ausgestaltung des Extrusionsbauteils als Strangpressteil ermöglicht eine besonders hohe Festigkeit bei gleichzeitig geringen Herstellungskosten.

Ist die Befestigungsvorrichtung als Extrusionsbauteil beziehungsweise Strangpressteil ausgestaltet, so ist sie lediglich in einer Richtung an eine Kontur des Dachs und des Galeriestabs anpassbar. In diesem Fall dient das Adapterbauteil einer Anpassung des Bauteils an das Dach beziehungsweise den Galeriestab. Beispielsweise ist es vorgesehen, dass identisch ausgestaltete Befestigungsvorrichtungen für eine Vielzahl von Dachrelings zum Einsatz kommen, wobei diese insbesondere über unterschiedlich ausgestaltete Galeriestäbe verfügen. Jede der Dachrelings verfügt über ein Adapterbauteil, welches eine Anpassung der jeweiligen Befestigungsvorrichtung an die unterschiedlichen Galeriestäbe vornimmt. Entsprechend kann die Befestigungsvorrichtung mit hohen Stückzahlen hergestellt werden, sodass sich ein Kostenvorteil ergibt.

Die Ausgestaltung des Adapterbauteils als Spritzgießbauteil stellt eine hohe Flexibilität bei der Ausgestaltung des Adapterbauteils sicher, sodass die Befestigungseinrichtung nahezu unabhängig von der Ausgestaltung der Befestigungsvorrichtung äußerst präzise an den Galeriestab und/oder das Dach angepasst ist. Als Resultat wird zum einen eine hohe Festigkeit der Verbindung zwischen dem Galeriestab und dem Dach, nämlich aufgrund der Verwendung der Befestigungsvorrichtung, und zum anderen ein besonders gefälliger optischer Eindruck der Dachreling erzielt. Das Adapterbauteil ist aufgrund seiner Ausgestaltung als Spritzgießbauteil einstückig und materialeinheitlich hergestellt. Das Adapterbauteil besteht insoweit nicht aus mehreren Teilen, welche aneinander befestigt werden, beispielsweise formschlüssig und/oder stoffschlüssig. Vielmehr wird das Adapterbauteil bereits einstückig hergestellt, also als ein einzelnes Element. Auch dies führt zu einer kostengünstigen und effizienten Herstellung.

Bei herkömmlichen Dachrelings dient allein die Befestigungsvorrichtung dem Abstützen und Befestigen des Galeriestabs, wohingegen das Adapterbauteil - falls überhaupt vorhanden - lediglich zum optischen Kaschieren der Befestigungsvorrichtung dient. Erfindungsgemäß weist jedoch auch das Adapterbauteil eine Tragwirkung auf, insbesondere stützen sich die Befestigungsvorrichtung und folglich der Galeriestab über das Adapterbauteil an dem Dach des Kraftfahrzeugs ab. Beispielsweise ist es hierbei vorgesehen, dass der Galeriestab unmittelbar an dem Adapterbauteil und/oder der Befestigungsvorrichtung anliegt. Besonders bevorzugt ist der Galeriestab im Längsschnitt gesehen durchgehend beabstandet von der Befestigungsvorrichtung angeordnet und stützt sich an dem Adapterbauteil ab. An der Befestigungsvorrichtung ist der Galeriestab mithilfe von Schraubverbindern befestigt. Zusätzlich oder alternativ ist es vorgesehen, dass sich die Befestigungsvorrichtung unmittelbar oder lediglich mittelbar über das Adapterbauteil an dem Dach abstützt. Besonders bevorzugt ist eine Ausgestaltung der Dachreling, bei welcher die Befestigungsvorrichtung bereichsweise unmittelbar an dem Dach anliegt und sich bereichsweise lediglich mittelbar über das Adapterbauteil an dem Dach abstützt.

Es ist also vorgesehen, dass der Galeriestab an der Befestigungsvorrichtung befestigt ist, wobei sich die Befestigungsvorrichtung wiederum nach der Montage der Dachreling an dem Kraftfahrzeug an dem Dach des Kraftfahrzeugs abstützt beziehungsweise an diesem befestigt ist. Es kann vorgesehen sein, dass sich die Befestigungsvorrichtung ausschließlich unmittelbar an dem Dach des Kraftfahrzeugs abstützt, also unmittelbar an diesem oder der Schutzfolie anliegt. Bevorzugt stützt sich die Befestigungsvorrichtung jedoch zumindest teilweise über das Adapterbauteil an dem Dach ab. Besonders bevorzugt ist zumindest ein Großteil der Befestigungsvorrichtung mittels des Adapterbauteils von dem Dach beabstandet, sodass allenfalls ein kleiner Teil der Befestigungsvorrichtung sich unmittelbar an dem Dach beziehungsweise der Schutzfolie abstützt, wohingegen der Rest der Befestigungsvorrichtung sich ausschließlich über das Adapterbauteil an dem Dach beziehungsweise der Schutzfolie abstützt. Hierdurch werden Beschädigungen des Dachs durch die Befestigungsvorrichtung zuverlässig vermieden.

Erfindungsgemäß weist die Befestigungsvorrichtung mehrere erste Befestigungsausnehmungen und mehrere zweite Befestigungsausnehmungen auf, wobei die ersten Befestigungsausnehmungen zur Aufnahme von einer Befestigung der Befestigungseinrichtung an dem Galeriestab dienenden ersten Schraubverbindern und die zweiten Befestigungsausnehmungen zur Aufnahme von einer Befestigung der Befestigungseinrichtung an dem Dach dienenden zweiten Schraubverbindern vorgesehen und ausgestaltet sind. Die Befestigungsvorrichtung verfügt insoweit über mehrere Befestigungsausnehmungen, nämlich über mehrere erste Befestigungsausnehmungen sowie über mehrere zweite Befestigungsausnehmungen. Die Befestigungsausnehmungen sind als Durchtrittsöffnungen ausgestaltet, durchgreifen also die Befestigungsvorrichtung jeweils vollständig.

In den ersten Befestigungsausnehmungen sind die ersten Schraubverbinder angeordnet, mittels welchen die Befestigungsvorrichtung an dem Galeriestab befestigt ist. In den zweiten Befestigungsausnehmungen sind hingegen die zweiten Schraubverbinder angeordnet, mittels welchen die Befestigungsvorrichtung an dem Dach befestigbar beziehungsweise befestigt ist. Unter den Schraubverbindern, also unter den ersten Schraubverbindern und den zweiten Schraubverbindern, sind bevorzugt Schrauben oder Bolzen zu verstehen. Entsprechend weist jeder der Schraubverbindern zumindest einen Schraubverbinderkopf und ein Schraubverbindergewinde auf.

Die Befestigungsausnehmungen, also sowohl die ersten Befestigungsausnehmungen als auch die zweiten Befestigungsausnehmungen, sind beabstandet zueinander angeordnet. Vorzugsweise liegen ihre Längsmittelachsen in einer gemeinsamen gedachten Ebene. Zusätzlich können ihre Längsmittelachsen parallel zueinander verlaufen. Bevorzugt ist es jedoch vorgesehen, dass die, insbesondere in der gemeinsamen gedachten Ebene vorliegenden, Längsmittelachsen zumindest einiger der Befestigungsausnehmungen gegeneinander angewinkelt sind, also miteinander einen Winkel einschließen, welcher größer als 0° und kleiner als 180° ist.

Die Erfindung sieht vor, dass jede der zweiten Befestigungsausnehmungen jeweils von einer Randfläche der Befestigungsvorrichtung umgriffen ist, die mit einer Unterseite des Adapterbauteils fluchtet oder in die von dem Galeriestab abgewandte Richtung über sie übersteht. Unter der Randfläche der Befestigungsvorrichtung ist eine Fläche der Befestigungsvorrichtung zu verstehen, welche einen durchgehenden Rand der jeweiligen zweiten Befestigungsausnehmung bildet. Die Randfläche umgreift also die entsprechende zweite Befestigungsausnehmung vollständig und ununterbrochen. Die Randfläche ist insoweit ringförmig, insbesondere kreisringförmig. Besonders bevorzugt stützt sich die Befestigungsvorrichtung über die Randflächen an dem Dach des Kraftfahrzeugs beziehungsweise der Schutzfolie ab. Entsprechend fluchtet sie mit der dem Galeriestab im Längsschnitt abgewandten Unterseite des Adapterbauteils oder steht sogar über diese über. Nach der Montage der Dachreling an dem Dach des Kraftfahrzeugs liegen also zumindest die Randflächen der Befestigungsvorrichtung an dem Dach an. Bevorzugt liegt auch die Unterseite des Adapterbauteils zumindest bereichsweise an dem Dach an. Eine derartige Ausgestaltung ermöglicht eine besonders zuverlässige und dauerhafte Verbindung der Dachreling mit dem Kraftfahrzeug.

Eine Weiterbildung der Erfindung sieht vor, dass das Adapterbauteil erste Schraubverbinderkopfaufnahmen aufweist, in welchen Köpfe der ersten Schraubverbinder beabstandet von der Unterseite des Adapterbauteils angeordnet sind. Die ersten Schraubverbindern dienen der Befestigung der Befestigungsvorrichtung an dem Galeriestab. Vorzugsweise greifen die ersten Schraubverbinder mit ihrem Schraubverbindergewinde an dem Galeriestab unmittelbar oder zumindest mittelbar über beispielsweise eine Gewindehülse oder dergleichen an. In jedem Fall liegen die Schraubverbinderköpfe der ersten Schraubverbinder auf der dem Galeriestab im Längsschnitt abgewandten Seite der Befestigungsvorrichtung vor. Auf dieser Seite verfügt das Adapterbauteil über die ersten Schraubverbinderkopfaufnahmen. Diese sind derart bemessen, dass die ersten Schraubverbinder und insbesondere ihre Schraubverbinderköpfe nach der Montage der Dachreling an dem Kraftfahrzeug beabstandet von dem Dach angeordnet sind. Hierdurch werden Beschädigungen des Dachs durch die ersten Schraubverbinder vermieden, insbesondere ein Verkratzen des Dachs.

Eine Weiterbildung der Erfindung sieht vor, dass die ersten Schraubverbinderkopfaufnahmen nach Anordnung der Dachreling an dem Kraftfahrzeug von dem Dach des Kraftfahrzeugs verschlossen sind. Die ersten Schraubverbinderkopfaufnahmen weisen auf ihrer bei bestimmungsgemäßer Anordnung der Dachreling dem Dach zugewandten Seite Mündungsöffnungen auf, welche eine Unterseite des Adapterbauteils durchgreifen. Diese Mündungsöffnungen sind von dem Dach des Kraftfahrzeugs verschlossen. Darunter ist insbesondere zu verstehen, dass das Dach derart an dem Adapterbauteil anliegt, dass es die Mündungsöffnungen verdeckt beziehungsweise übergreift. Besonders bevorzugt übergreift das Dach die Mündungsöffnungen hierbei durchgehend und vollständig. Beispielsweise liegen also die Mündungsöffnungen begrenzende Ränder, die von dem Adapterbauteil gebildet sind, an dem Dach an, insbesondere durchgehend beziehungsweise ununterbrochen.

Alternativ sind die Mündungsöffnungen von dem Dach beabstandet angeordnet. Hierbei ist jedoch ein Abstand der Mündungsöffnungen von dem Dach vergleichsweise gering. Vorzugsweise entspricht er höchstens einem Durchmesser der ersten Schraubverbinder, insbesondere ist er kleiner. Beispielsweise entspricht er höchstens dem Durchmesser der ersten Schraubverbinder multipliziert mit einem Faktor von 0,75, 0,5 oder 0,25. In jedem Fall sind die ersten Schraubverbinderkopfaufnahmen besonders bevorzugt derart bemessen, dass die ersten Schraubverbinder mit dem Dach in Anlagekontakt geraten, bevor sie außer Eingriff mit dem Galeriestab treten. Hierdurch ist eine besonders effektive Sicherung der Dachreling gegen ungewolltes Lösen realisiert.

Eine Weiterbildung der Erfindung sieht vor, dass die Befestigungsvorrichtung als durchgehendes Bauteil ausgestaltet ist oder mehrere beabstandet voneinander in dem Adapterbauteil aufgenommene und die Befestigungsausnehmungen aufweisende Verstärkungselemente aufweist. Auf eine entsprechende Ausgestaltung der Befestigungsvorrichtung wurde bereits hingewiesen. Im Falle des durchgehenden Bauteils ist der Galeriestab über die Befestigungsvorrichtung unmittelbar an dem Dach befestigt. Das bedeutet, dass die Befestigungsvorrichtung einerseits an dem Galeriestab und andererseits an dem Dach befestigt ist, sodass zwischen dem Galeriestab und dem Dach wirkende Kräfte durchgehend über die Befestigungsvorrichtung übertragen werden.

Verfügt die Befestigungsvorrichtung hingegen über die Verstärkungselemente, so liegt kein durchgehendes Bauteil vor. Vielmehr sind einige der Verstärkungselemente an dem Galeriestab und andere der Verstärkungselemente an dem Dach befestigt und beabstandet voneinander in dem Adapterbauteil aufgenommen. Die zwischen dem Galeriestab und dem Dach wirkenden Kräfte werden also nicht durchgehend über die Befestigungsvorrichtung, sondern zumindest teilweise über das Adapterbauteil übertragen, da die mit dem Galeriestab verbundenen Verstärkungselemente einerseits und die mit dem Dach verbundenen beziehungsweise verbindbaren Verstärkungselemente andererseits ausschließlich über das Adapterbauteil miteinander verbunden beziehungsweise aneinander befestigt sind.

Die als durchgehendes Bauteil ausgestaltete Befestigungsvorrichtung zeichnet sich durch eine hohe Festigkeit auf, wohingegen die die Verstärkungselemente aufweisende Befestigungsvorrichtung besonders kostengünstig zu realisieren ist und ein geringes Gewicht aufweist. Besonders bevorzugt liegt das durchgehende Bauteil als Extrusionsbauteil oder als Band vor.

Eine Weiterbildung der Erfindung sieht vor, dass die Verstärkungselemente als jeweils wenigstens einen mit dem Adapterbauteil zumindest bereichsweise umspritzten Formschlussbund aufweisende Buchsen ausgestaltet sind, wobei die die zweiten Befestigungsausnehmungen aufweisenden Buchsen jeweils zusätzlich einen von dem Formschlussbund beabstandeten weiteren Formschlussbund aufweisen und das Adapterbauteil formschlüssig zwischen den Formschlussbund und den weiteren Formschlussbund eingreift. Die Verstärkungselemente liegen also als Buchsen vor, in welchen die Befestigungsausnehmungen ausgebildet sind. Jede der Buchsen weist wenigstens einen Formschlussbund auf, unter welchem ein stegartiger Vorsprung zu verstehen ist, welcher von einem Grundkörper der jeweiligen Buchse ausgeht. Der Formschlussbund liegt beispielsweise als umlaufende Steg und insoweit als Ringsteg vor.

Der Formschlussbund ist zum Befestigen der jeweiligen Buchse in dem Adapterbauteil angeordnet, greift also formschlüssig in dieses ein. Zumindest diejenigen Buchsen, in welchen die zweiten Befestigungsausnehmungen ausgebildet sind, verfügen zusätzlich zu dem Formschlussbund über den weiteren Formschlussbund. Der Formschlussbund und der weitere Formschlussbund sind beabstandet voneinander angeordnet, insbesondere parallel beabstandet. Der weitere Formschlussbund kann gemäß den Ausführungen zu dem Formschlussbund ausgebildet sein. Das Adapterbauteil greift formschlüssig zwischen den Formschlussbund und den weiteren Formschlussbund ein, um die entsprechende Buchse formschlüssig zu befestigen. Besonders bevorzugt ist es hierbei vorgesehen, dass einer der Formschlussbunde, beispielsweise der weitere Formschlussbund, bündig mit der Unterseite des Adapterbauteils abschließt. Hierdurch ist ein Befestigungspunkt zur sicheren Befestigung der Dachreling an dem Dach geschaffen.

Vorzugsweise sind die Buchsen, in welchen die ersten Befestigungsausnehmungen ausgebildet sind, anders ausgestaltet als die Buchsen, in welchen die zweiten Befestigungsausnehmungen vorliegen. Insbesondere weisen die die ersten Befestigungsausnehmungen aufweisenden Buchsen lediglich den Formschlussbund, nicht jedoch den weiteren Formschlussbund auf. Vorzugsweise ist der Formschlussbund in Richtung einer Längsmittelachse der jeweiligen Buchse mittig oder zumindest in etwa mittig an dieser ausgebildet. An den die zweiten Befestigungsausnehmungen aufweisenden Buchsen sind der Formschlussbund und der weitere Formschlussbund hingegen bevorzugt außermittig angeordnet, insbesondere jeweils endseitig. Das bedeutet, dass der Formschlussbund und der weitere Formschlussbund an gegenüberliegenden Enden der jeweiligen Buchse angeordnet sind. Hierdurch wird eine zuverlässige Befestigung der Verstärkungselemente sowohl an dem Galeriestab als auch an dem Dach des Kraftfahrzeugs erzielt.

Eine Weiterbildung der Erfindung sieht vor, dass der Galeriestab eine im Schnitt gesehen der Befestigungseinrichtung abgewandte Oberseite, von der Oberseite ausgehende Seitenwände sowie eine auf einer Auflagefläche der Befestigungseinrichtung aufliegende Bodenwand aufweist. Im Querschnitt gesehen kann der Galeriestab grob gesprochen in die Oberseite, die Seitenwände und die Bodenwand unterteilt werden. Die Oberseite und die Bodenwand sind hierbei über die Seitenwände miteinander verbunden. Im Querschnitt gesehen bilden beispielsweise die Oberseite, die Seitenwände und die Bodenwand zumindest bereichsweise eine geschlossene Kontur. Der Galeriestab stützt sich an der Auflagefläche der Befestigungseinrichtung ab. Die Auflagefläche ist an dem Adapterbauteil ausgebildet. Die Auflagefläche ist bevorzugt an die Bodenwand des Galeriestabs form- und abmessungsangepasst, sodass ein flächiges Anliegen der Bodenwand an der Auflagefläche realisiert ist.

Eine Weiterbildung der Erfindung sieht vor, dass die ersten Befestigungsausnehmungen die Auflagefläche durchgreifen. Insoweit sind Mündungsöffnungen der ersten Befestigungsausnehmungen, die auf der dem Galeriestab zugewandten Seite der Befestigungseinrichtung beziehungsweise des Adapterbauteils vorliegen, von der Auflagefläche begrenzt. In anderen Worten sind Ränder der Mündungsöffnungen von der Auflagefläche gebildet. Dies ermöglicht eine kompakte und optisch unauffällige Befestigung des Galeriestabs mittels der Befestigungseinrichtung.

Eine Weiterbildung der Erfindung sieht vor, dass das Adapterbauteil wenigstens eine über die Auflagefläche überstehende Stützwand aufweist, an welcher eine der Seitenwände des Galeriestabs oder ein von einer der Seitenwände des Galeriestabs ausgehender Seitenwandfortsatz zur Seitenführung des Galeriestabs bezüglich des Adapterbauteils anliegt. Um die Seitenführung des Galeriestabs bezüglich des Adapterbauteils zu verbessern, ist an dem Adapterbauteil die Stützwand ausgebildet, welche über die Auflagefläche übersteht, nämlich in die von dem Dach des Kraftahrzeugs abgewandte Richtung. An dieser Stützwand liegt beispielsweise eine der Seitenwände des Galeriestabs an.

Alternativ geht von der Seitenwand des Galeriestabs der Seitenwandfortsatz aus, der sich an der Stützwand abstützt. Unter dem Seitenwandfortsatz ist ein Fortsatz der Seitenwand zu verstehen, der sich ausgehend von der jeweiligen Seitenwand in Richtung des Dachs des Kraftfahrzeugs erstreckt. Bevorzugt ist der Seitenwandfortsatz gegenüber der entsprechenden Seitenwand versetzt angeordnet, insbesondere parallel versetzt angeordnet. Die beschriebene Ausgestaltung der Dachreling erleichtert zum Einen die Ausrichtung des Galeriestabs während der Montage und zum Anderen stellt es eine zuverlässige Befestigung des Galeriestabs an dem Dach sicher.

Eine Weiterbildung der Erfindung sieht vor, dass die Seitenwand und der Seitenwandfortsatz über eine die Stützwand übergreifende Kröpfung des Galeriestabs verbunden sind. Vorstehend wurde bereits erwähnt, dass die Seitenwand und der Seitenwandfortsatz bevorzugt versetzt zueinander angeordnet sind, insbesondere parallel versetzt. Dieser Versatz wird mithilfe der Kröpfung erzielt. Unter der Kröpfung ist hierbei ein Bereich des Galeriestabs zu verstehen, in welchem sich eine Breite des Galeriestabs ausgehend von der Seitenwand in Richtung des Seitenwandfortsatzes verringert. Die Kröpfung erzielt insoweit eine Verjüngung des Galeriestabs im Querschnitt gesehen in Richtung des Dachs.

Eine Weiterbildung der Erfindung sieht vor, dass das Adapterbauteil sich an die zweiten Befestigungsausnehmungen anschließende zweite Schraubverbinderkopfaufnahmen aufweist, in welchen Schraubverbinderköpfe der zweiten Schraubverbinder angeordnet und formschlüssig drehfest gehalten sind. Die zweiten Schraubverbinder dienen der Befestigung der Befestigungseinrichtung an dem Dach des Kraftfahrzeugs. Sie sind in den zweiten Befestigungsausnehmungen der Befestigungsvorrichtung angeordnet. Üblicherweise wird zunächst die Befestigungseinrichtung an dem Galeriestab montiert und anschließend die Anordnung aus Befestigungseinrichtung und Galeriestab auf das Dach des Kraftfahrzeugs aufgesetzt. Dies macht es notwendig, dass die zweiten Schraubverbinder bereits an der Befestigungseinrichtung angeordnet sind, um die Befestigungseinrichtung rasch und zuverlässig an dem Dach befestigen zu können. Entsprechend ist es vorgesehen, dass vor der Befestigung der Befestigungseinrichtung und des Galeriestabs aneinander die zweiten Schraubverbinder in die zweiten Befestigungsausnehmungen eingesetzt werden. Erst anschließend wird die Befestigungseinrichtung an dem Galeriestab befestigt und nachfolgend die Anordnung aus Befestigungseinrichtung und Galeriestab an dem Dach angeordnet.

Um eine Drehbewegung der zweiten Schraubverbindern während des Befestigens der Dachreling an dem Dach zu verhindern, ist das Adapterbauteil derart ausgestaltet, dass es die Schraubverbinderköpfe der zweiten Schraubverbindern formschlüssig drehfest hält. Hierzu verfügt das Adapterbauteil über die zweiten Schraubverbinderkopfaufnahmen, die an die Schraubverbinderköpfe der zweiten Schraubverbinder form- und abmessungsangepasst sind, nämlich zumindest derart, dass das formschlüssige Halten der zweiten Schraubverbinder an dem Adapterbauteil realisiert ist. Zumindest eine der zweiten Befestigungsausnehmungen ist insbesondere derart angeordnet, dass sie nach der Befestigung der Befestigungseinrichtung an dem Galeriestab von dem Galeriestab, insbesondere der Bodenwand des Galeriestabs, zumindest bereichsweise übergriffen sind. Entsprechend ist zumindest einer der beiden Schraubverbinder von dem Galeriestab an dem Adapterbauteil verliersicher gehalten. Die beschriebene Ausgestaltung der Dachreling stellt eine einfache und rasche Montage an dem Dach des Kraftfahrzeugs sicher.

Eine Weiterbildung der Erfindung sieht vor, dass das Adapterbauteil einen über die Auflagefläche überstehenden Fortsatz aufweist, der in einen dem Dach entgegentretenden Fußbereich des Galeriestabs eingreift, wobei der Fußbereich eine dem Dach zugewandte Fußfläche aufweist, die den Fortsatz U-förmig umgreift sowie mit der Unterseite des Adapterbauteils fluchtet oder in die dem Dach zugewandte Richtung über sie übersteht. Der Fortsatz ist Bestandteil des Adapterbauteils. Beispielsweise geht der Fortsatz unmittelbar von der Auflagefläche aus. Er kann jedoch auch von der Auflagefläche beabstandet angeordnet sein. In jedem Fall greift er in den Fußbereich des Galeriestabs ein, um auch diesen zuverlässig zu befestigen, insbesondere um eine Seitenführung für den Fußbereich zu realisieren.

In dem Fußbereich liegt der Galeriestab nach der Montage der Dachreling an dem Kraftfahrzeug an dem Dach an oder weist zumindest den über die Erstreckung der Galeriestabs in Längsrichtung gesehen geringsten Abstand des Galeriestabs zu dem Dach auf. Der Fußbereich endet in der Fußfläche, welche auf der dem Dach zugewandten Seite des Galeriestabs ausgebildet ist. Die Fußfläche kann durchgehend und vollständig in einer gedachten Ebene liegen. Bevorzugt ist die Fußfläche jedoch in sich gekrümmt. Hierbei weist sie einen durchgehend stetigen Verlauf auf.

Vorzugsweise liegt die Fußfläche nach der Montage der Dachreling an dem Kraftfahrzeug an dem Dach durchgehend und vollständig an. Die Fußfläche ist U-förmig ausgestaltet und umgreift den Fortsatz des Adapterbauteils. Besonders bevorzugt liegt der Fortsatz durchgehend an dem Fußbereich an. Die Fußfläche kann in die dem Dach zugewandte Richtung über das Adapterbauteil beziehungsweise dessen Unterseite überstehen. Bevorzugt fluchtet sie jedoch mit ihr. Hierdurch wird zum Einen eine zuverlässige Befestigung der Dachreling an dem Kraftfahrzeug und zum Anderen ein äußerst gefälliger optischer Eindruck erzielt.

Eine besonders bevorzugte Ausgestaltung der Dachreling für ein Kraftfahrzeug verfügt über mindestens einen Galeriestab und zumindest eine Befestigungseinrichtung zur endseitigen Befestigung des Galeriestabs an einem Dach des Kraftfahrzeugs, wobei die Befestigungseinrichtung eine an dem Galeriestab befestigte und an dem Dach befestigbare Befestigungsvorrichtung und ein die Befestigungsvorrichtung zumindest bereichsweise aufnehmendes Adapterbauteil aufweist, wobei der Galeriestab eine im Schnitt gesehen der Befestigungseinrichtung abgewandte Oberseite, von der Oberseite ausgehende Seitenwände sowie eine über die Seitenwände mit der Oberseite verbundene Bodenwand aufweist, und wobei das Adapterbauteil als Spritzgießbauteil ausgebildet ist und die Befestigungsvorrichtung umspritzt in dem Adapterbauteil vorliegt. Dabei ist vorgesehen, dass die Bodenwand an einer Auflagefläche des Adapterbauteils flächig anliegt, und dass die Befestigungsvorrichtung mehrere, die Auflagefläche durchgreifende erste Befestigungsausnehmungen und mehrere zweite Befestigungsausnehmungen aufweist, wobei die ersten Befestigungsausnehmungen zur Aufnahme von einer Befestigung der Befestigungseinrichtung an dem Galeriestab dienenden ersten Schraubverbindern und die zweiten Befestigungsausnehmungen zur Aufnahme von einer Befestigung der Befestigungseinrichtung an dem Dach dienenden zweiten Schraubverbindern vorgesehen und ausgestaltet sind, und wobei das Adapterbauteil auf seiner dem Galeriestab im Längsschnitt abgewandten Seite erste Schraubverbinderkopfaufnahmen aufweist, in welchen Schraubverbinderköpfe der ersten Schraubverbinder beabstandet von einer Unterseite des Adapterbauteils angeordnet sind.

Die Erfindung betrifft weiterhin ein Kraftfahrzeug mit einem Dach und einer an dem Dach befestigten Dachreling, insbesondere einer Dachreling gemäß den Ausführungen im Rahmen dieser Beschreibung, wobei die Dachreling über mindestens einen Galeriestab und zumindest eine Befestigungseinrichtung zur endseitigen Befestigung des Galeriestabs an einem Dach des Kraftfahrzeugs verfügt, wobei die Befestigungseinrichtung eine an dem Galeriestab und an dem Dach befestigte Befestigungsvorrichtung und ein die Befestigungsvorrichtung zumindest bereichsweise aufnehmendes Adapterbauteil aufweist. Dabei ist vorgesehen, dass das Adapterbauteil als Spritzgießbauteil ausgebildet ist und die Befestigungsvorrichtung umspritzt in dem Adapterbauteil vorliegt.

Auf die Vorteile einer derartigen Ausgestaltung des Kraftfahrzeugs beziehungsweise der Dachreling wurde bereits hingewiesen. Sowohl das Kraftfahrzeug als auch die Dachreling können gemäß den Ausführungen im Rahmen dieser Beschreibung weitergebildet sein, sodass insoweit auf diese verwiesen wird.

Die Erfindung betrifft zudem ein Verfahren zum Herstellen einer Dachreling, insbesondere einer Dachreling gemäß den Ausführungen im Rahmen dieser Beschreibung, wobei die Dachreling über mindestens einen Galeriestab und zumindest eine Befestigungseinrichtung zur endseitigen Befestigung des Galeriestabs an einem Dach des Kraftfahrzeugs verfügt, wobei die Befestigungseinrichtung eine an dem Galeriestab befestigte und an dem Dach befestigbare Befestigungsvorrichtung und ein die Befestigungsvorrichtung zumindest bereichsweise aufnehmendes Adapterbauteil aufweist. Dabei ist vorgesehen, dass das Adapterbauteil als Spritzgießbauteil ausgebildet wird und die Befestigungsvorrichtung mit dem Adapterbauteil umspritzt wird, sodass sie umspritzt in dem Adapterbauteil vorliegt.

Erneut wird hinsichtlich der Vorteile und möglicher vorteilhafter Weiterbildungen des Verfahrens und der Dachreling auf die Ausführung im Rahmen dieser Beschreibung verwiesen.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt
- Figur 1: eine schematische Darstellung eines Kraftfahrzeugs mit einer an einem Dach des Kraftahrzeugs befestigten Dachreling,
- Figur 2: eine schematische Längsschnittdarstellung einer ersten Ausführungsform der Dachreling, mit einer Befestigungseinrichtung zur Befestigung eines Galeriestabs an dem Dach,
- Figur 3: eine schematische Darstellung der Befestigungseinrichtung für die erste Ausführungsform der Dachreling,
- Figur 4: eine schematische Längsschnittdarstellung der Dachreling in einer zweiten Ausführungsform, sowie
- Figur 5: eine schematische Darstellung der Befestigungseinrichtung für die zweite Ausführungsform der Dachreling.

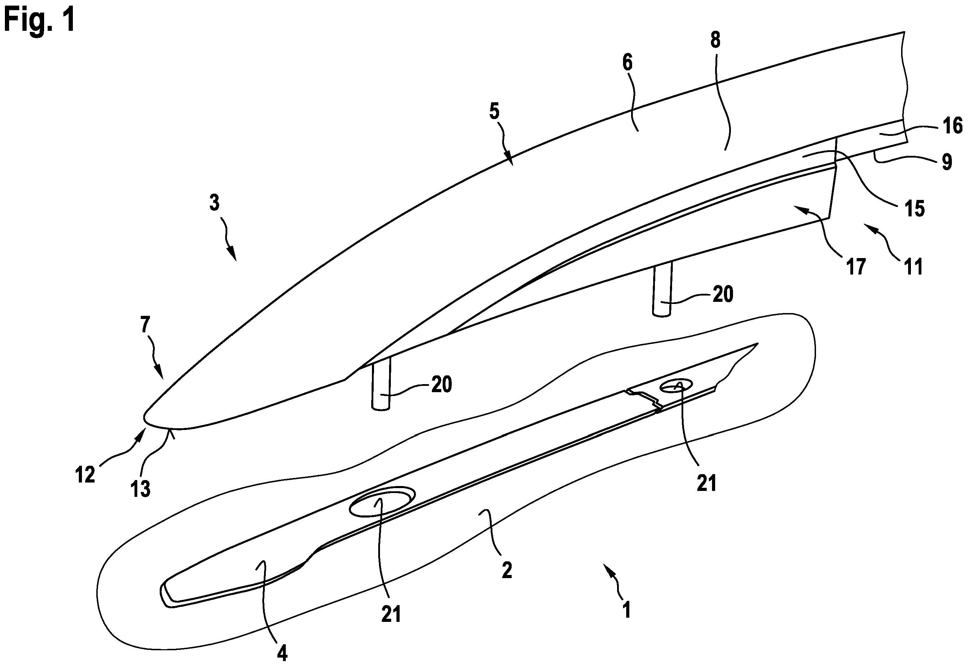

Die Figur 1 zeigt eine schematische Darstellung eines Kraftfahrzeugs 1, das über ein Dach 2 sowie eine Dachreling 3 verfügt. Die Dachreling 3 ist an dem Dach 2 befestigt. Zwischen dem Dach 2 und der Dachreling 3 ist eine Schutzfolie 4 angeordnet, um eine wechselseitige Beschädigung von Dach 2 und Dachreling 3 zu verhindern. Die Schutzfolie 4 kann auch als Teil des Dachs 2 angesehen werden, sodass das Dach 2 bereichsweise die Schutzfolie 4 aufweist, nämlich dort, wo sich die Dachreling 3 an dem Dach 2 abstützt beziehungsweise dieses berührt. Die Dachreling 3 weist einen Galeriestab 5 auf. Grundsätzlich kann die Dachreling 3 über eine beliebige Anzahl von Galeriestäben 5 verfügen. In diesem Fall verlaufen die mehreren Galeriestäbe 5 bevorzugt parallel zueinander. Nachfolgend wird lediglich auf den Galeriestab 5 eingegangen. Liegen mehrere Galeriestäbe 5 vor, so sind die Ausführungen auf jeden dieser Galeriestäbe 5 analog anwendbar.

Der Galeriestab 5 weist auf seiner dem Dach 2 abgewandten Seite eine Oberseite 6 auf, welche in Richtung eines Endes 7 des Galeriestabs 5 in Richtung des Dachs 2 gekrümmt ist. Insbesondere ist - wie dargestellt - der gesamte Galeriestab in Richtung des Dachs 2 gekrümmt. Von der Oberseite 6 gehen Seitenwände 8 aus, von welchen hier lediglich eine erkennbar ist. Die Seitenwände 8 verlaufen parallel zueinander und erstrecken sich bevorzugt über einen Großteil der Erstreckung des Galeriestabs 5. Nach unten wird der Galeriestab 5 wenigstens bereichsweise von einer Bodenwand 9 begrenzt, welche über die Seitenwände 8 mit der Oberseite 6 verbunden ist. Die Bodenwand 9 weist in Längsrichtung der Dachreling 3 bevorzugt eine kleinere Erstreckung auf als die Oberseite 6 und die Seitenwände 8. Hierdurch ist im Bereich des Endes 7 des Galeriestabs 5 eine hier nicht erkennbare Ausnehmung 10 gebildet.

Der Galeriestab 5 ist endseitig mittels einer Befestigungseinrichtung 11 an dem Dach befestigt. Bevorzugt greift die Befestigungseinrichtung 11 hierzu auch in die Ausnehmung 10 ein. Die Oberseite 6 des Galeriestabs 5 liegt im Schnitt gesehen auf der der Befestigungseinrichtung 11 abgewandten Seite des Galeriestabs 5 vor, wohingegen die Bodenwand 9 der Befestigungseinrichtung 11 zugewandt ist beziehungsweise auf der der Befestigungseinrichtung 11 zugewandten Seite des Galeriestabs 5 angeordnet ist. Insbesondere liegt die Bodenwand 9 auf einer hier nicht dargestellten Auflagefläche 29 der Befestigungseinrichtung 11 auf, sodass sich der Galeriestab 5 an ihr abstützt.

Beispielsweise verfügt das Ende 7 des Galeriestabs 5 über einen Fußbereich 12, in welchem an dem Galeriestab 5 eine Fußfläche 13 ausbildet, welche im Wesentlichen U-förmig ist. Vorzugsweise stützt sich der Galeriestab 5 mittels der Fußfläche 13 unmittelbar an dem Dach 2 beziehungsweise der Schutzfolie 4 ab. Hierzu ist die Fußfläche 13 beispielsweise in sich gekrümmt, sodass sie an das Dach 2 formangepasst ist. Die Fußfläche 13 umgreift einen Bereich der Befestigungseinrichtung 11, nämlich einen Fortsatz 14, zur Realisierung einer Seitenführung des Galeriestabs 5 auch an seinem Ende 7. Eine weitere Seitenführung des Galeriestabs 5 bezüglich der Befestigungseinrichtung 11 wird im Übrigen mittels einer Stützwand 15 erzielt, die Bestandteil der Befestigungseinrichtung 11 ist und an welcher die Seitenwand 8 oder - wie in dem hier dargestellten Ausführungsbeispiel - ein Seitenwandfortsatz 16 flächig anliegt. Die Stützwand ist Bestandteil eines Adapterbauteils 17 der Befestigungseinrichtung 11.

Zusätzlich zu dem Adapterbauteil 17 verfügt die Befestigungseinrichtung 11 über eine Befestigungsvorrichtung 18, welche hier jedoch nicht erkennbar ist, da sie von dem Adapterbauteil 17 verdeckt wird. Das Adapterbauteil 17 liegt in Form eines Spritzgießbauteils vor und nimmt das Adapterbauteil 17 auf. Hierbei ist die Befestigungsvorrichtung 18 in dem Adapterbauteil 17 umspritzt angeordnet und insoweit formschlüssig in diesem gehalten. Bevorzugt liegt die Befestigungsvorrichtung 18 vollständig innerhalb einer Einhüllenden beziehungsweise innerhalb einer Kontur des Adapterbauteils 17 vor, steht also nicht über das Adapterbauteil 17 über.

Eine Befestigung des Galeriestabs 5 an dem Dach 2 erfolgt schlussendlich mittels erster Schraubverbinder 19 und zweiter Schraubverbinder 20, wobei hier lediglich letztere erkennbar sind. Die ersten Schraubverbinder 19 dienen einer Befestigung der Befestigungseinrichtung 11 beziehungsweise genauer gesagt der Befestigungsvorrichtung 18 an dem Galeriestab 5. Mittels der zweiten Schraubverbinder 20 ist hingegen die Befestigungseinrichtung 11 beziehungsweise genauer gesagt die Befestigungsvorrichtung 18 an dem Dach 2 befestigt. Die ersten Schraubverbinder 19 und die zweiten Schraubverbinder 20 greifen beabstandet voneinander an der Befestigungseinrichtung 11 beziehungsweise der Befestigungsvorrichtung 18 an. Bevorzugt ist es vorgesehen, dass die Schutzfolie 4 Aussparungen 21 für die zweiten Schraubverbinder 20 aufweist.

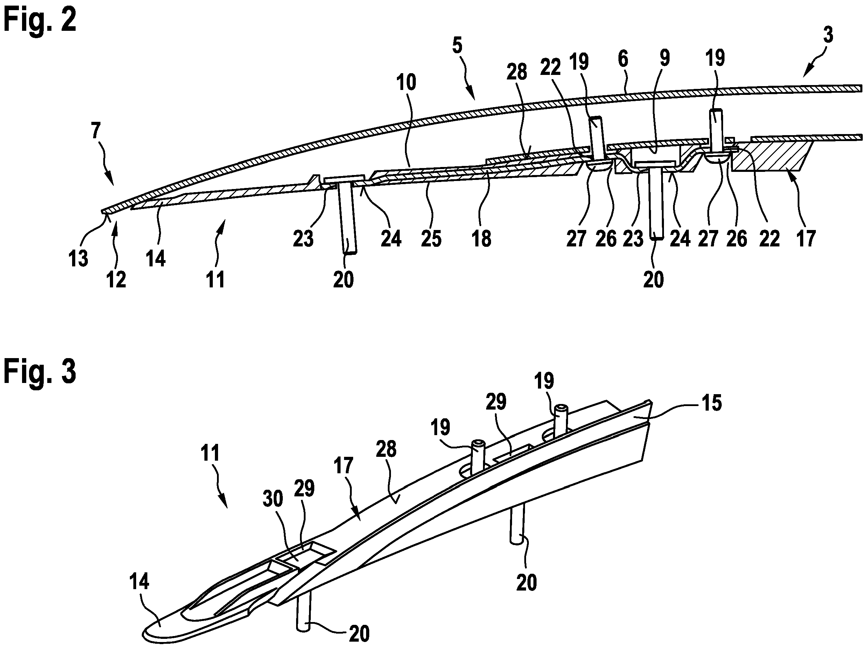

Die Figur 2 zeigt eine schematische Längsschnittdarstellung einer ersten Ausführungsform der Dachreling 3. In der ersten Ausführungsform ist die nun erkennbare Befestigungsvorrichtung 18 als durchgehendes Bauteil ausgestaltet, insbesondere liegt sie in Form eines gebogenen Blechbands beziehungsweise Blechstreifens vor. Hierunter ist zu verstehen, dass die Befestigungsvorrichtung 18 eine durchgehend konstante Materialstärke aufweist und in einer ersten Richtung deutlich größere Abmessungen aufweist als in einer senkrecht auf dieser ersten Richtung stehenden zweiten Richtung. Die erste Richtung und die zweite Richtung stehen wiederum senkrecht auf einer dritten Richtung, in welcher die Materialstärke vorliegt. Beispielsweise sind die Abmessungen in der ersten Richtung um einen Faktor von wenigstens 5, wenigstens 7,5 oder wenigstens 10 größer als die Abmessungen in der zweiten Richtung.

Die Befestigungsvorrichtung 18 verfügt über erste Befestigungsausnehmungen 22 sowie zweite Befestigungsausnehmungen 23. In den ersten Befestigungsausnehmungen 22 sind die ersten Schraubverbinder 19 und in den zweiten Befestigungsausnehmungen 23 die zweiten Schraubverbinder 20 angeordnet. Im Längsschnitt gesehen sind die ersten Befestigungsausnehmungen 22 oberhalb der zweiten Befestigungsausnehmungen 23 angeordnet, also auf der dem Galeriestab 5 zugewandten Seite einer gedachten Längsmittelebene der Befestigungsvorrichtung 18 beziehungsweise einer die Befestigungsvorrichtung 18 schneidenden gedachten Ebene. In dem hier dargestellten Ausführungsbeispiel liegt eine der zweiten Befestigungsausnehmungen 23 in einem gekröpften Bereich der Befestigungsvorrichtung 18 vor, in welcher das durchgehende Bauteil in Richtung des Dachs 2 beziehungsweise in die von dem Galeriestab 5 abgewandte Richtung verkröpft ist.

Die zweiten Befestigungsausnehmungen 23 sind jeweils von einer Randfläche 24 der Befestigungsvorrichtung 18 vollständig und ununterbrochen umgriffen. Die Randflächen sind insoweit jeweils ringförmig. Bevorzugt liegen die Randflächen 24 jeweils vollständig und durchgehend in einer gedachten Ebene. Erfindungsgemäß fluchten die Randflächen 24 mit einer Unterseite 25 des Adapterbauteils 17 oder stehen sogar in die von dem Galeriestab 5 abgewandte Richtung über sie über. Das bedeutet, dass sich die Dachreling 3 zumindest über die Randflächen 24 an dem Dach 2 abstützt beziehungsweise dass die Randflächen 24 unmittelbar an dem Dach 2 anliegen. Besonders bevorzugt liegt die Befestigungsvorrichtung 18 ausschließlich mit ihren Randflächen 24 an dem Dach 2 an und ist ansonsten von dem Dach 2 beabstandet, vorzugsweise indem ihre abseits der Randflächen 24 liegenden Bereiche in dem Adapterbauteil 17 aufgenommen sind und zumindest nicht über dessen Kontur beziehungsweise Einhüllende überstehen.

Es ist erkennbar, dass die Dachreling 3 mit ihrer Bodenwand 9 an dem Adapterbauteil 17 anliegt und insbesondere von dieser von der Befestigungsvorrichtung 18 beabstandet ist. Der Galeriestab 5 stützt sich insoweit über das Adapterbauteil 17 und/oder die Befestigungsvorrichtung 18 an dem Dach 2 ab. Zusätzlich liegt es optional mit seiner Fußfläche 13 unmittelbar an dem Dach 2 an. Insbesondere ist es vorgesehen, dass das Adapterbauteil 17 den Galeriestab 5 in vertikaler Richtung abstützt, wohingegen der Galeriestab 5 mittels der Befestigungsvorrichtung 18 insbesondere in Längsrichtung und in Querrichtung bezüglich des Dachs 2 festgelegt ist. Selbstverständlich verhindert die Befestigungsvorrichtung 18 jedoch auch ein Entfernen des Galeriestabs 5 von dem Dach 2 in vertikaler Richtung, also eine Verlagerung des Galeriestabs 5 in die von dem Dach 2 abgewandte Richtung. Insgesamt ist somit der Galeriestab 5 durch das Zusammenwirken des Adapterbauteils 17 und der Befestigungsvorrichtung 18 sicher und zuverlässig an dem Dach 2 festgelegt.

Um eine Beschädigung des Dachs 2 durch die ersten Schraubverbindern 19 zu verhindern, liegen in dem Adapterbauteil 17 erste Schraubverbinderkopfaufnahmen 26 vor, nämlich auf der dem Galeriestab 5 abgewandten Seite der Befestigungsvorrichtung 18. In die ersten Schraubverbinderkopfaufnahmen 26 greifen Schraubverbinderköpfe 27 der ersten Schraubverbinder 19 ein, sodass sie beabstandet von dem Dach 2 vorliegen.

Die Figur 3 zeigt eine schematische Darstellung der Befestigungseinrichtung 11 für die erste Ausführungsform der Dachreling 3. Erkennbar sind lediglich das Adapterbauteil 17 sowie die ersten Schraubverbinder 19 und die zweiten Schraubverbinder 20. Erkennbar ist nun eine Auflagefläche 28, an welcher sich in der Galeriestab 5 mit seiner Bodenwand 9 abstützt. Es ist zudem erkennbar, dass die Stützwand 15 in Richtung des Galeriestabs 5 über die Auflagefläche 28 übersteht. Ebenso steht der Fortsatz 14 über die Auflagefläche 28 über, nämlich in Längsrichtung der Dachreling 3 beziehungsweise des Galeriestabs 5.

Das Adapterbauteil 17 verfügte zusätzlich zu den ersten Schraubverbinderkopfaufnahmen 26 über zweite Schraubverbinderkopfaufnahmen 29, in welchen Schraubverbinderköpfe 30 der zweiten Schraubverbinder 20 angeordnet sind. Die zweiten Schraubverbinderkopfaufnahmen 29 sind an die Schraubverbinderköpfe 30 form- und abmessungsangepasst, sodass die Schraubverbinderköpfe 30 und mithin die zweiten Schraubverbinder 20 formschlüssig drehfest bezüglich des Adapterbauteils 17 festgelegt sind. Hierdurch wird eine einfache und rasche Befestigung der Dachreling 3 an dem Dach 2 des Kraftfahrzeugs 1 erzielt.

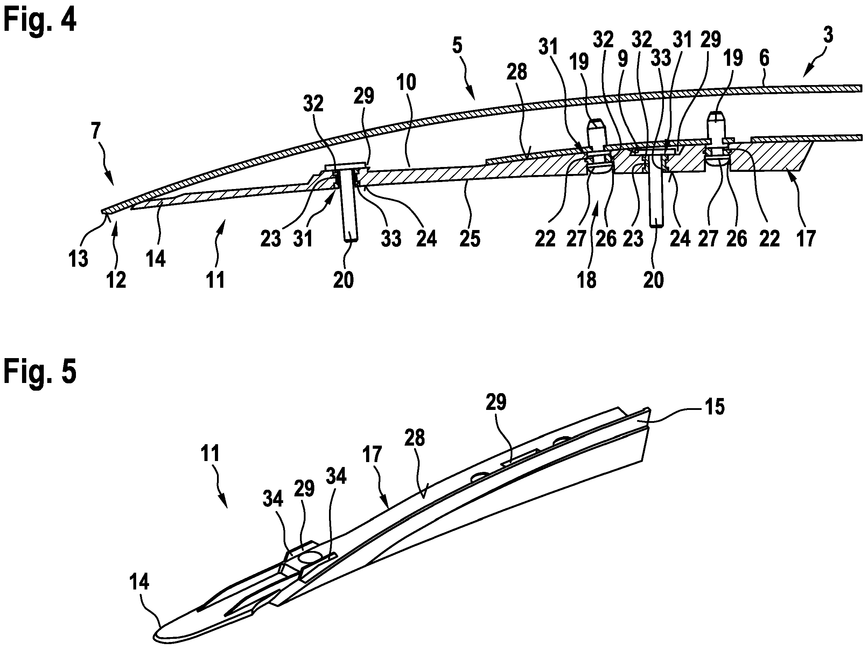

Die Figur 4 zeigt eine schematische Längsschnittdarstellung der Dachreling 3 in einer zweiten Ausführungsform. Grundsätzlich wird auf die vorstehenden Ausführungen hinsichtlich der ersten Ausführungsform verwiesen und lediglich auf die Unterschiede eingegangen. Diese liegen darin, dass die Befestigungsvorrichtung 18 nun nicht mehr als durchgehendes Bauteil ausgestaltet ist, sondern mehrere beabstandet voneinander in dem Adapterbauteil 17 aufgenommene und über die Befestigungsausnehmungen 22 und 23 aufweisende Verstärkungselemente 31 verfügt. Die Verstärkungselemente 31 liegen als Buchsen vor, welche jeweils wenigstens einen Formschlussbund 32 aufweisen, der mit dem Adapterbauteil 17 umspritzt ist.

Diejenigen der Verstärkungselemente 31, welche die ersten Befestigungsausnehmungen 22 aufnehmen, verfügen lediglich über einen einzigen Formschlussbund 32, welcher in Richtung ihrer jeweiligen Längsmittelachse in etwa mittig beziehungsweise genau mittig angeordnet ist. Die Verstärkungselemente 31, in welchen die zweiten Befestigungsausnehmungen 23 ausgebildet sind, verfügen hingegen über einen weiteren Formschlussbund 33, der beabstandet von dem Formschlussbund 32 ausgebildet ist. Das Adapterbauteil 17 greift zum Festlegen des jeweiligen Verstärkungselemente 31 zwischen den Formschlussbund 32 und den weiteren Formschlussbund 33 ein. Besonders bevorzugt ist es vorgesehen, dass der weitere Formschlussbund 33 bündig mit der Unterseite 25 des Adapterbauteils 17 abschließt, sodass der weitere Formschlussbund 33 die vorstehend bereits erwähnte Randfläche 24 bildet.

Die Figur 5 zeigt eine schematische Darstellung der Befestigungseinrichtung 11 für die zweite Ausführungsform der Dachreling 3. Erneut wird auf die vorstehenden Ausführungen hingewiesen und lediglich auf die Unterschiede zu der ersten Ausführungsform eingegangen. Diese liegen im Wesentlichen in der Ausgestaltung der zweiten Schraubverbinderkopfaufnahme 29 begründet. Während im Rahmen der ersten Ausführungsform eine Vertiefung zur Ausbildung der zweiten Schraubverbinderkopfaufnahme 29 in dem Adapterbauteil 17 vorlag, wird die zweite Schraubverbinderkopfaufnahme 29 für die zweite Ausdrucksform lediglich von zwei Stegen begrenzt, welche bevorzugt parallel zueinander verlaufen. Diese beiden Stege 34 dienen dem formschlüssigen Halten des jeweiligen zweiten Schraubverbinders 20, sodass dieser bezüglich des Adapterbauteils 17 drehfest festgesetzt ist.

Die beschriebene Ausgestaltung des Kraftfahrzeugs 1 beziehungsweise der Dachreling 3 ermöglicht eine einfache und rasche Montage der Dachreling 2 an dem Dach 2 des Kraftfahrzeugs. Gleichzeitig ist die Befestigungseinrichtung 11 kostengünstig herstellbar und stellt eine zuverlässige Lasteinleitung von dem Galeriestab 5 in das Dach 2 sicher.

### BEZUGSZEICHENLISTE

- 1: Kraftfahrzeug
- 2: Dach
- 3: Dachreling
- 4: Schutzfolie
- 5: Galeriestab
- 6: Oberseite
- 7: Ende
- 8: Seitenwand
- 9: Bodenwand
- 10: Ausnehmung
- 11: Befestigungseinrichtung
- 12: Fußbereich
- 13: Fußfläche
- 14: Fortsatz
- 15: Stützwand
- 16: Seitenwandfortsatz
- 17: Adapterbauteil
- 18: Befestigungsvorrichtung
- 19: 1. Schraubverbinder
- 20: 2. Schraubverbinder
- 21: Aussparung
- 22: 1. Befestigungsausnehmung
- 23: 2. Befestigungsausnehmung
- 24: Randfläche
- 25: Unterseite
- 26: 1. Schraubverbinderkopfaufnahme
- 27: Schraubverbinderkopf
- 28: Auflagefläche
- 29: 2. Schraubverbinderkopfaufnahme
- 30: Schraubverbinderkopf
- 31: Verstärkungselemente
- 32: Formschlussbund
- 33: Formschlussbund
- 34: Steg

## Patentansprüche

1. Dachreling (3) für ein Kraftfahrzeug (1), mit mindestens einem Galeriestab (5) und zumindest einer Befestigungseinrichtung (11) zur endseitigen Befestigung des Galeriestabs (5) an einem Dach (2) des Kraftfahrzeugs (1), wobei die Befestigungseinrichtung (11) eine an dem Galeriestab (5) befestigte und an dem Dach (2) befestigbare Befestigungsvorrichtung (18) und ein die Befestigungsvorrichtung (18) zumindest bereichsweise aufnehmendes Adapterbauteil (17) aufweist, wobei das Adapterbauteil (17) als Spritzgießbauteil ausgebildet ist und die Befestigungsvorrichtung (18) umspritzt in dem Adapterbauteil (17) vorliegt, **dadurch gekennzeichnet, dass** die Befestigungsvorrichtung (18) mehrere erste Befestigungsausnehmungen (22) und mehrere zweite Befestigungsausnehmungen (23) aufweist, wobei die ersten Befestigungsausnehmungen (22) zur Aufnahme von einer Befestigung der Befestigungseinrichtung (11) an dem Galeriestab (5) dienenden ersten Schraubverbindern (19) und die zweiten Befestigungsausnehmungen (23) zur Aufnahme von einer Befestigung der Befestigungseinrichtung (11) an dem Dach (2) dienenden zweiten Schraubverbindern (20) vorgesehen und ausgestaltet sind, wobei jede der zweiten Befestigungsausnehmungen (23) jeweils von einer Randfläche (24) der Befestigungsvorrichtung (18) umgriffen ist, die mit einer Unterseite (25) des Adapterbauteils (17) fluchtet oder in die von dem Galeriestab (5) abgewandte Richtung über sie übersteht.

2. Dachreling nach Anspruch 1, **dadurch gekennzeichnet, dass** das Adapterbauteil (17) erste Schraubverbinderkopfaufnahmen (29) aufweist, in welchen Köpfe der ersten Schraubverbinder (19) beabstandet von der Unterseite des Adapterbauteils (17) angeordnet sind.

3. Dachreling nach einem der vorhergehenden Ansprüche, **dadurch gekennzeichnet, dass** die ersten Schraubverbinderkopfaufnahmen (29) nach Anordnung der Dachreling (3) an dem Kraftfahrzeug (1) von dem Dach (2) des Kraftfahrzeugs (1) verschlossen sind.

4. Dachreling nach einem der vorhergehenden Ansprüche, **dadurch gekennzeichnet, dass** die Befestigungsvorrichtung (18) als durchgehendes Bauteil ausgestaltet ist oder mehrere beabstandet voneinander in dem Adapterbauteil (17) aufgenommene und die Befestigungsausnehmungen (22, 23) aufweisende Verstärkungselemente (31) aufweist.

5. Dachreling nach einem der vorhergehenden Ansprüche, **dadurch gekennzeichnet, dass** die Verstärkungselemente (31) als jeweils wenigstens einen mit dem Adapterbauteil (17) zumindest bereichsweise umspritzten Formschlussbund (32) aufweisende Buchsen ausgestaltet sind, wobei die die zweiten Befestigungsausnehmungen (23) aufweisenden Buchsen jeweils zusätzlich einen von dem Formschlussbund (32) beabstandeten weiteren Formschlussbund (33) aufweisen und das Adapterbauteil (17) formschlüssig zwischen den Formschlussbund (32) und den weiteren Formschlussbund (33) eingreift.

6. Dachreling nach einem der vorhergehenden Ansprüche, **dadurch gekennzeichnet, dass** der Galeriestab (5) eine im Schnitt gesehen der Befestigungseinrichtung (11) abgewandte Oberseite (6), von der Oberseite (6) ausgehende Seitenwände (8) sowie eine auf einer Auflagefläche (28) der Befestigungseinrichtung (11) aufliegende Bodenwand (9) aufweist.

7. Dachreling nach einem der vorhergehenden Ansprüche, **dadurch gekennzeichnet, dass** die ersten Befestigungsausnehmungen (22) die Auflagefläche (28) durchgreifen.

8. Dachreling nach einem der vorhergehenden Ansprüche, **dadurch gekennzeichnet, dass** das Adapterbauteil (17) wenigstens eine über die Auflagefläche (28) überstehende Stützwand (15) aufweist, an welcher eine der Seitenwände (8) des Galeriestabs (5) oder ein von einer der Seitenwände (8) des Galeriestabs (5) ausgehender Seitenwandfortsatz (16) zur Seitenführung des Galeriestabs (5) bezüglich des Adapterbauteils (17) anliegt.

9. Dachreling nach einem der vorhergehenden Ansprüche, **dadurch gekennzeichnet, dass** die eine Seitenwand (8) und der Seitenwandfortsatz (16) über eine die Stützwand (15) übergreifende Kröpfung des Galeriestabs (5) verbunden sind.

10. Dachreling nach einem der vorhergehenden Ansprüche, **dadurch gekennzeichnet, dass** das Adapterbauteil (17) sich an die zweiten Befestigungsausnehmungen (23) anschließende zweite Schraubverbinderkopfaufnahmen (29) aufweist, in welchen Schraubverbinderköpfe (30) der zweiten Schraubverbinder (20) angeordnet und formschlüssig drehfest gehalten sind.

11. Dachreling nach einem der vorhergehenden Ansprüche, **dadurch gekennzeichnet, dass** das Adapterbauteil (17) einen über die Auflagefläche (28) überstehenden Fortsatz (14) aufweist, der in einen dem Dach (2) entgegentretenden Fußbereich (12) des Galeriestabs (5) eingreift, wobei der Fußbereich (12) eine dem Dach (2) zugewandte Fußfläche (13) aufweist, die den Fortsatz (14) U-förmig umgreift sowie mit der Unterseite (25) des Adapterbauteils (17) fluchtet oder in die dem Dach (2) zugewandte Richtung über sie übersteht.

12. Kraftfahrzeug (1) mit einem Dach (2) und einer an dem Dach (2) befestigten Dachreling (3) nach einem oder mehreren der vorhergehenden Ansprüche.

13. Verfahren zum Herstellen einer Dachreling (3), insbesondere einer Dachreling (3) nach einem oder mehreren der Ansprüche 1 bis 8, wobei die Dachreling (3) über mindestens einen Galeriestab (5) und zumindest eine Befestigungseinrichtung (11) zur endseitigen Befestigung des Galeriestabs (5) an einem Dach (2) des Kraftfahrzeugs (1) verfügt, wobei die Befestigungseinrichtung (11) eine an dem Galeriestab (5) befestigte und an dem Dach (2) befestigbare Befestigungsvorrichtung (18) und ein die Befestigungsvorrichtung (18) zumindest bereichsweise aufnehmendes Adapterbauteil (17) aufweist, wobei das Adapterbauteil (17) als Spritzgießbauteil ausgebildet und die Befestigungsvorrichtung (18) mit dem Adapterbauteil (17) umspritzt wird, sodass sie umspritzt in dem Adapterbauteil (17) vorliegt, **dadurch gekennzeichnet, dass** die Befestigungsvorrichtung (18) mehrere erste Befestigungsausnehmungen (22) und mehrere zweite Befestigungsausnehmungen (23) aufweist, wobei die ersten Befestigungsausnehmungen (22) zur Aufnahme von einer Befestigung der Befestigungseinrichtung (11) an dem Galeriestab (5) dienenden ersten Schraubverbindern (19) und die zweiten Befestigungsausnehmungen (23) zur Aufnahme von einer Befestigung der Befestigungseinrichtung (11) an dem Dach (2) dienenden zweiten Schraubverbindern (20) vorgesehen und ausgestaltet sind, wobei jede der zweiten Befestigungsausnehmungen (23) jeweils von einer Randfläche (24) der Befestigungsvorrichtung (18) umgriffen ist, die mit einer Unterseite (25) des Adapterbauteils (17) fluchtet oder in die von dem Galeriestab (5) abgewandte Richtung über sie übersteht.

## Claims

1. Roof rack (3) for a motor vehicle (1), having at least one gallery bar (5) and at least one fastening device (11) for fastening the gallery bar (5) at an end to a roof (2) of the motor vehicle (1), wherein the fastening device (11) comprises a fastening apparatus (18), which is fastened to the gallery bar (5) and can be fastened to the roof (2), and an adapter component (17), which accommodates the fastening apparatus (18) at least partially, wherein the adapter component (17) is configured as an injection-moulded component and the fastening apparatus (18) is present overmoulded in the adapter component (17), **characterised in that** the fastening apparatus (18) comprises a plurality of first fastening recesses (22) and a plurality of second fastening recesses (23), wherein the first fastening recesses (22) are provided and designed to receive first screw connectors (19) serving to fasten the fastening device (11) to the gallery bar (5) and the second fastening recesses (23) are provided and designed to receive second screw connectors (20) serving to fasten the fastening device (11) to the roof (2), wherein each of the second fastening recesses (23) is respectively embraced by an edge surface (24) of the fastening apparatus (18), which is aligned with an underside (25) of the adapter component (17) or projects beyond it in the direction facing away from the gallery bar (5).

2. Roof rack according to claim 1, **characterised in that** the adapter component (17) has first screw connector head receptacles (29), in which heads of the first screw connectors (19) are arranged at a distance from the underside of the adapter component (17).

3. Roof rack according to one of the preceding claims, **characterised in that** the first screw connector head receptacles (29) are closed by the roof (2) of the motor vehicle (1) after the roof rack (3) is arranged on the motor vehicle (1).

4. Roof rack according to one of the preceding claims, **characterised in that** the fastening apparatus (18) is designed as a continuous component or comprises a plurality of reinforcing elements (31) which are received spaced from one another in the adapter component (17) and comprise the fastening recesses (22, 23).

5. Roof rack according to one of the preceding claims, **characterised in that** the reinforcing elements (31) are designed as bushes each comprising at least one form-fitting collar (32) overmoulded at least partially with the adapter component (17), wherein the bushes comprising the second fastening recesses (23) each additionally comprise a further form-fitting collar (33) spaced from the form-fitting collar (32), and the adapter component (17) engages form-fittingly between the form-fitting collar (32) and the further form-fitting collar (33).

6. Roof rack according to one of the preceding claims, **characterised in that** the gallery bar (5) has an upper side (6) facing away from the fastening device (11) when viewed in section, side walls (8) extending from the upper side (6) and a base wall (9) resting on a resting surface (28) of the fastening device (11).

7. Roof rack according to one of the preceding claims, **characterised in that** the first fastening recesses (22) engage through the resting surface (28).

8. Roof rack according to one of the preceding claims, **characterised in that** the adapter component (17) comprises at least one supporting wall (15) which projects beyond the resting surface (28) and against which one of the side walls (8) of the gallery bar (5) or a side wall extension (16) extending from one of the side walls (8) of the gallery bar (5) abuts for lateral guidance of the gallery bar (5) with respect to the adapter component (17).

9. Roof rack according to one of the preceding claims, **characterised in that** the one side wall (8) and the side wall extension (16) are connected by an offset of the gallery bar (5) overlapping the supporting wall (15).

10. Roof rack according to one of the preceding claims, **characterised in that** the adapter component (17) comprises second screw connector head receptacles (29) adjoining the second fastening recesses (23), in which screw connector heads (30) of the second screw connectors (20) are arranged and held in a form-fittingly rotationally fixed manner.

11. Roof rack according to one of the preceding claims, **characterised in that** the adapter component (17) has an extension (14) which projects beyond the resting surface (28) and engages in a foot region (12) of the gallery bar (5) facing the roof (2), wherein the foot region (12) comprises a foot surface (13) facing the roof (2), which embraces the extension (14) in a U-shape and is aligned with the underside (25) of the adapter component (17) or projects beyond it in the direction facing the roof (2).

12. Motor vehicle (1) comprising a roof (2) and a roof rack (3) attached to the roof (2) according to one or more of the preceding claims.

13. Method for producing a roof rack (3), in particular a roof rack (3) according to one or more of claims 1 to 8, wherein the roof rack (3) has at least one gallery bar (5) and at least one fastening device (11) for fastening the gallery bar (5) at an end to a roof (2) of the motor vehicle (1), wherein the fastening device (11) comprises a fastening apparatus (18) which is fastened to the gallery bar (5) and can be fastened to the roof (2) and an adapter component (17) which accommodates the fastening apparatus (18) at least partially, wherein the adapter component (17) is configured as an injection-moulded component and the fastening apparatus (18) is overmoulded with the adapter component (17), so that it is present overmoulded in the adapter component (17), **characterised in that in that** the fastening apparatus (18) comprises a plurality of first fastening recesses (22) and a plurality of second fastening recesses (23), wherein the first fastening recesses (22) are provided and designed to receive first screw connectors (19) serving to fasten the fastening device (11) to the gallery bar (5) and the second fastening recesses (23) are provided and designed to receive second screw connectors (20) serving to fasten the fastening device (11) to the roof (2), wherein each of the second fastening recesses (23) is respectively embraced by an edge surface (24) of the fastening apparatus (18), which is aligned with an underside (25) of the adapter component (17) or projects beyond it in the direction facing away from the gallery bar (5).

## Revendications

1. Galerie de toit (3) pour un véhicule automobile (1), avec au moins une barre de galerie (5) et au moins un dispositif de fixation (11) pour une fixation en extrémité de la barre de galerie (5) sur un toit (2) du véhicule automobile (1), dans laquelle le dispositif de fixation (11) présente un dispositif de fixation (18) fixé à la barre de galerie (5) et pouvant être fixé au toit (2) et un composant adaptateur (17) accueillant au moins localement le dispositif de fixation (18), dans laquelle le composant adaptateur (17) est réalisé sous la forme d'un composant moulé par injection et le dispositif de fixation (18) est surmoulé dans le composant adaptateur (17), **caractérisée en ce que** le dispositif de fixation (18) présente plusieurs premiers évidements de fixation (22) et plusieurs seconds évidements de fixation (23), dans laquelle les premiers évidements de fixation (22) sont prévus et conçus afin d'accueillir des premiers raccords à vis (19) servant à une fixation du dispositif de fixation (11) sur la barre de galerie (5) et les seconds évidements de fixation (23) sont prévus et conçus afin d'accueillir des seconds raccords à vis (20) servant à une fixation du dispositif de fixation (11) sur le toit (2), dans laquelle chacun des seconds évidements de fixation (23) est entouré respectivement d'une surface de bord (24) du dispositif de fixation (18) qui est alignée avec une face inférieure (25) du composant adaptateur (17) ou qui dépasse de celle-ci dans la direction pointant à l'opposé de la barre de galerie (5).

2. Galerie de toit selon la revendication 1, **caractérisée en ce que** le composant adaptateur (17) présente des premiers logements de tête de raccord à vis (29) au sein desquels des têtes des premiers raccords à vis (19) sont agencées à distance de la face inférieure du composant adaptateur (17).

3. Galerie de toit selon l'une quelconque des revendications précédentes, **caractérisée en ce que** les premiers logements de tête de raccord à vis (29) sont obturés par le toit (2) du véhicule automobile (1) après l'agencement de la galerie de toit (3) sur le véhicule automobile (1).

4. Galerie de toit selon l'une quelconque des revendications précédentes, **caractérisée en ce que** le dispositif de fixation (18) est réalisé sous la forme d'un composant continu ou présente plusieurs éléments de renforcement (31) accueillis à distance les uns des autres dans le composant adaptateur (17) et présentant les évidements de fixation (22, 23).

5. Galerie de toit selon l'une quelconque des revendications précédentes, **caractérisée en ce que** les éléments de renforcement (31) sont réalisés sous la forme de douilles présentant respectivement au moins une collerette de verrouillage par complémentarité de forme (32) surmoulée au moins localement par le composant adaptateur (17), dans laquelle les douilles présentant les seconds évidements de fixation (23) présentent respectivement et de manière supplémentaire une autre collerette de verrouillage par complémentarité de forme (33) espacée de la collerette de verrouillage par complémentarité de forme (32) et le composant adaptateur (17) vient en prise par complémentarité de forme entre la collerette de verrouillage par complémentarité de forme (32) et l'autre collerette de verrouillage par complémentarité de forme (33).

6. Galerie de toit selon l'une quelconque des revendications précédentes, **caractérisée en ce que** la barre de galerie (5) présente une face supérieure (6) opposée au dispositif de fixation (11) dans une vue en coupe, des parois latérales (8) partant de la face supérieure (6) et une paroi de fond (9) reposant sur une surface d'appui (28) du dispositif de fixation (11).

7. Galerie de toit selon l'une quelconque des revendications précédentes, **caractérisée en ce que** les premiers évidements de fixation (22) traversent la surface d'appui (28).

8. Galerie de toit selon l'une quelconque des revendications précédentes, **caractérisée en ce que** le composant adaptateur (17) présente au moins une paroi d'appui (15) dépassant de la surface d'appui (28) et au niveau de laquelle s'appuie une des parois latérales (8) de la barre de galerie (5) ou un prolongement de paroi latérale (16) partant d'une des parois latérales (8) de la barre de galerie (5) et permettant de guider de manière latérale la barre de galerie (5) par rapport au composant adaptateur (17).

9. Galerie de toit selon l'une quelconque des revendications précédentes, **caractérisée en ce qu'**une des parois latérales (8) et le prolongement de paroi latérale (16) sont reliés par un coude de la barre de galerie (5) recouvrant la paroi d'appui (15).

10. Galerie de toit selon l'une quelconque des revendications précédentes, **caractérisée en ce que** le composant adaptateur (17) présente des seconds logements de tête de raccord à vis (29) se raccordant aux seconds évidements de fixation (23) et au sein desquels des têtes de raccord à vis (30) des seconds raccords à vis (20) sont agencées et retenues solidaires en rotation par verrouillage par complémentarité de forme.

11. Galerie de toit selon l'une quelconque des revendications précédentes, **caractérisée en ce que** le composant adaptateur (17) présente un prolongement (14) dépassant de la surface d'appui (28), qui vient en prise dans une région de pied (12) de la barre de galerie (5) rencontrant le toit (2), dans laquelle la région de pied (12) présente une surface de pied (13) qui est tournée vers le toit (2) et qui entoure le prolongement (14) en suivant une forme de U et est alignée avec la face inférieure (25) du composant adaptateur (17) ou dépasse de celle-ci dans la direction pointant vers le toit (2).

12. Véhicule automobile (1) comprenant un toit (2) et une galerie de toit (3) fixée au toit (2) selon l'une quelconque ou plusieurs des revendications précédentes.

13. Procédé de fabrication d'une galerie de toit (3), en particulier d'une galerie de toit (3) selon l'une ou plusieurs des revendications 1 à 8, dans lequel la galerie de toit (3) dispose d'au moins une barre de galerie (5) et d'au moins un dispositif de fixation (11) pour une fixation en extrémité de la barre de galerie (5) sur un toit (2) du véhicule automobile (1), dans lequel le dispositif de fixation (11) présente un dispositif de fixation (18) fixé à la barre de galerie (5) et pouvant être fixé au toit (2) et un composant adaptateur (17) accueillant au moins localement le dispositif de fixation (18), dans lequel le composant adaptateur (17) est réalisé sous la forme d'un composant moulé par injection et le dispositif de fixation (18) est surmoulé avec le composant adaptateur (17) de sorte qu'il est surmoulé dans le composant adaptateur (17), **caractérisé en ce que** le dispositif de fixation (18) présente plusieurs premiers évidements de fixation (22) et plusieurs seconds évidements de fixation (23), dans lequel les premiers évidements de fixation (22) sont prévus et conçus afin d' accueillir des premiers raccords à vis (19) servant à une fixation du dispositif de fixation (11) sur la barre de galerie (5) et les seconds évidements de fixation (23) sont prévus et conçus afin d'accueillir des seconds raccords à vis (20) servant à une fixation du dispositif de fixation (11) sur le toit (2), dans lequel chacun des seconds évidements de fixation (23) est entouré respectivement d'une surface de bord (24) du dispositif de fixation (18) qui est alignée avec une face inférieure (25) du composant adaptateur (17) ou qui dépasse de celle-ci dans la direction pointant à l'opposé de la barre de galerie (5).
